# EUROPEAN PATENT SPECIFICATION

(11) **EP 3 355 551 B1**
(45) Date of publication and mention of the grant of the patent: **24.07.2019**
(21) Application number: 16856592.7
(22) Date of filing: 29.04.2016
(51) Int. Cl.: H04L 29/08, H04W 84/12

(54) **DATA ACCESS METHOD AND DEVICE**
DATENZUGRIFFSVERFAHREN UND -VORRICHTUNG
PROCÉDÉ ET DISPOSITIF D'ACCÈS À DES DONNÉES

(30) Priority: 23.10.2015 CN 201510695323
(43) Date of publication of application: 01.08.2018
(73) Proprietor: ZTE Corporation, Shenzhen, Guangdong 518057 (CN)
(72) Inventor: GU, Mingtao, Shenzhen Guangdong 518057 (CN); WANG, Yulei, Shenzhen Guangdong 518057 (CN); QI, Lin, Shenzhen Guangdong 518057 (CN); ZHANG, Chunfa, Shenzhen Guangdong 518057 (CN)
(74) Representative: J A Kemp
(86) International application number: PCT/CN2016/080772
(87) International publication number: WO 2017/067146

(56) References cited:
- WO-A1-2011/054375
- CN-A- 102 045 403
- CN-A- 102 591 963
- CN-A- 102 664 938
- CN-A- 103 123 630
- CN-A- 104 618 450
- US-A1- 2005 259 668
- US-A1- 2011 202 625

## Description

### Technical Field

The present application relates to, but is not limited to, the field of communication.

### Background

A current method of accessing data roughly includes:
a mobile terminal receives a data access request from a user and sends the data access request to a network side, herein the data access request contains an access address; the network side searches a preset corresponding relationship between access addresses and data for data corresponding to the access address and sending the searched-out data to the mobile terminal, which displays or plays based on the received data; and the mobile terminal deletes the received data when completing the displaying or playing.

In the current method of accessing data, because the number of Internet users is getting larger and larger, it is easy to cause network congestion, thus the Internet speed of users is decreased and the user experience is lower.

The features of the preamble of the independent claims are known from CN104618450A. The invention is defined by the independent claims.

### Summary

The following is a summary of the subject matter described herein in detail. This summary is not intended to limit the protection scope of the claims.

This document proposes a method and apparatus of accessing data according to appended independent claims so as to increase the Internet speed of users, thereby improving the user experience. Further improvements and embodiments are provided in the dependent claims.

Also provided is a method of accessing data which includes:
receiving a first data access request from a user, and if a wireless fidelity (Wifi) address and a caching address corresponding to an access address in the first data access request cannot be obtained in all mobile terminals which join a local area network, sending the first data access request to a network side; and
caching received data from the network side, and storing a corresponding relationship between a Wifi address of itself, the access address in the first data access request, and a caching address of the data or sending the corresponding relationship to a master control mobile terminal of the local area network.

In an exemplary embodiment, when it is determined that data cached by itself is deleted, the method further includes:
deleting a corresponding relationship between a caching address of the deleted data, the access address and the Wifi address, or sending a message indicating that a corresponding relationship between the caching address of the deleted data, the access address and the Wifi address is deleted to the master control mobile terminal.

In an exemplary embodiment, when it is determined that one or more mobile terminals in the local area network exit the local area network, the method further includes:
deleting a corresponding relationship between a Wifi address of a mobile terminal which exits the local area network, the access address and a caching address.

In an exemplary embodiment, when obtaining the Wifi address and the caching address corresponding to the access address in the first data access request in a mobile terminal of the local area network, the method further includes:
obtaining data corresponding to the access address according to the obtained Wifi address and caching address.

In an exemplary embodiment, obtaining the Wifi address and the caching address corresponding to the access address in the first data access request includes:
sending a request for obtaining a corresponding relationship between a Wifi address, a access address and a caching address to the master control mobile terminal of the local area network; and receiving a corresponding relationship from the master control mobile terminal and searching the received corresponding relationship for the Wifi address and the caching address corresponding to the access address in the first data access request; or
sending a request for obtaining a Wifi address and a caching address corresponding to the access address in the first data access request to the master control mobile terminal of the local area network; and receiving the searched-out Wifi address and caching address from the master control mobile terminal.

In an exemplary embodiment, obtaining the data corresponding to the access address according to the obtained Wifi address and caching address includes:
when it is determined that the searched-out or received Wifi address is the Wifi address of itself, obtaining the data in the searched-out or received caching address.

In an exemplary embodiment, when it is determined that the searched-out or received Wifi address is not the Wifi address of itself, obtaining the data corresponding to the access address according to the obtained Wifi address and caching address includes:
sending a second data access request a mobile terminal corresponding to the searched-out or received Wifi address, herein the second data access request contains the searched-out or received caching address; and
receiving the data corresponding to the searched-out or received caching address from the mobile terminal corresponding to the searched-out or received Wifi address.

In an exemplary embodiment, obtaining the Wifi address and the caching address corresponding to the access address in the first data access request includes:
searching the corresponding relationship, prestored by itself, between the Wifi address, the access address and the caching address for the Wifi address and the caching address corresponding to the access address in the first data access request;
obtaining the data corresponding to the access address according to the obtained Wifi address and caching address includes:
   obtaining the data in the searched-out caching address.

In an exemplary embodiment, obtaining the Wifi address and the caching address corresponding to the access address in the first data access request includes:
if the Wifi address and the caching address corresponding to the access address in the first data access request cannot be found in the corresponding relationship, prestored by itself, between the Wifi address, the access address and the caching address, sending a request for obtaining the corresponding relationship to all the other mobile terminals of the local area network; and receiving corresponding relationships from all the other mobile terminals of the local area network, and searching the received corresponding relationships for the Wifi address and the caching address corresponding to the access address in the first data access request; or
if the Wifi address and the caching address corresponding to the access address in the first data access request cannot be found in the corresponding relationship, prestored by itself, between the Wifi address, the access address and the caching address, sending the request for obtaining the Wifi address and the caching address corresponding to the access address in the first data access request to all the other mobile terminals of the local area network; and receiving the searched-out Wifi address/addresses and caching address/addresses from one or more of all the other mobile terminals of the local area network.

In an exemplary embodiment, obtaining the data corresponding to the access address according to the obtained Wifi address and caching address includes:
sending the second data access request to a mobile terminal corresponding to one of the searched-out or received Wifi address/addresses, herein the second data access request contains a caching address corresponding to one of the searched-out or received Wifi address/addresses; and
receiving data corresponding to the searched-out or received caching address from the mobile terminal corresponding to the one of the searched-out or received Wifi address/ addresses.

In an exemplary embodiment, when a corresponding relationship is received from another mobile terminal in the local area network, the method further includes:
storing the received corresponding relationship.

In an exemplary embodiment, when a message indicating that the corresponding relationship between the caching address of the deleted data, the access address and the Wifi address is deleted is received from another mobile terminal in the local area network, the method further includes:
deleting the corresponding relationship, stored by itself, between the caching address of the deleted data, the Wifi address, the access address.

In an exemplary embodiment, when the request for obtaining the corresponding relationship between the Wifi address, the access address and the caching address is received from another mobile terminal in the local area network, the method further includes:
sending the corresponding relationship, stored by itself, between the Wifi address, the access address and the caching address to a mobile terminal which sends the request for obtaining the corresponding relationship between the Wifi address, the access address and the caching address.

In an exemplary embodiment, when the request for obtaining the Wifi address and the caching address corresponding to the access address in the first data access request is received from another mobile terminal in the local area network, the method further includes:
searching the corresponding relationship, stored by itself, between the Wifi address, the access address and the caching address for the Wifi address and the caching address corresponding to the access address in the first data access request, and sending the searched-out Wifi address and caching address corresponding to the access address in the first data access request to a mobile terminal which sends the request for obtaining the Wifi address and caching address corresponding to the access address in the first data access request.

In an exemplary embodiment, when the caching address is received from another mobile terminal of the local area network, the method further includes:
sending data corresponding to the caching address to the mobile terminal which sends the caching address.

In an exemplary embodiment, when the master control mobile terminal of the local area network is used and a request for exiting the local area network is received from the user, the method further includes:
sending the corresponding relationship stored by itself to any other mobile terminal in the local area network.

Also provided is an apparatus of accessing data which includes:
an obtaining module configured to receive a first data access request from a user, and if a wireless fidelity (Wifi) address and a caching address corresponding to an access address in the first data access request cannot be obtained in all mobile terminals which join a local area network, send the first data access request to a network side; and
a storing module configured to cache received data from the network side and store a corresponding relationship between a Wifi address of itself, the access address in the first data access request and a caching address of the data or send the corresponding relationship to a master control mobile terminal of the local area network.

In an exemplary embodiment, the storing module is further configured to:
when determining that data cached by itself is deleted, delete a corresponding relationship between a caching address of the deleted data, the access address and the Wifi address, or send a message indicating that a corresponding relationship between a caching address of the deleted data, the access address and the Wifi address is deleted to the master control mobile terminal.

In an exemplary embodiment, the storing module is further configured to:
when determining that one or more mobile terminals in the local area network exit the local area network, delete a corresponding relationship between a Wifi address of a mobile terminal which exits the local area network, the access address and the caching address.

Alternatively, the obtaining module is further configured to:
when obtaining the Wifi address and the caching address corresponding to the access address in the first data access request in a mobile terminal of the local area network, obtain data corresponding to the access address according to the obtained Wifi address and caching address.

In an exemplary embodiment, the obtaining module is configured to:
send a request for obtaining a corresponding relationship between a Wifi address, a access address and a caching address to the master control mobile terminal of the local area network; and receive a corresponding relationship from the master control mobile terminal and search the received corresponding relationship for the Wifi address and the caching address corresponding to the access address in the first data access request; or
send a request for obtaining a Wifi address and a caching address corresponding to the access address in the first data access request to the master control mobile terminal of the local area network; and receive the searched-out Wifi address and caching address from the master control mobile terminal.

In an exemplary embodiment, the obtaining module is configured to:
when it is determined that the searched-out or received Wifi address is the Wifi address of itself, obtain the data in the searched-out or received caching address.

In an exemplary embodiment, the obtaining module is further configured to:
when it is determined that the searched-out or received Wifi address is not the Wifi address of itself, send a second data access request to a mobile terminal corresponding to the searched-out or received Wifi address, herein the second data access request contains the searched-out or received caching address; and receive data corresponding to the searched-out or received caching address from the mobile terminal corresponding to the searched-out or received Wifi address.

In an exemplary embodiment, the obtaining module is configured to:
search the corresponding relationship, prestored by itself, between the Wifi address, the access address and the caching address for the Wifi address and the caching address corresponding to the access address in the first data access request; and obtain the data in the searched-out caching address.

In an exemplary embodiment, the obtaining module is configured to:
if the Wifi address and the caching address corresponding to the access address in the first data access request cannot be found in the corresponding relationship, prestored by itself, between the Wifi address, the access address and the caching address, send a request for obtaining the corresponding relationship to all the other mobile terminals of the local area network; and receive corresponding relationships from all the other mobile terminals of the local area network, and search the received corresponding relationships for the Wifi address and the caching address corresponding to the access address in the first data access request; or
if the Wifi address and the caching address corresponding to the access address in the first data access request cannot be found in the corresponding relationship, prestored by itself, between the Wifi address, the access address and the caching address, send the request for obtaining the Wifi address and the caching address corresponding to the access address in the first data access request to all the other mobile terminals of the local area network; and receive the searched-out Wifi address/addresses and caching address/addresses from one or more of all the other mobile terminals of the local area network.

In an exemplary embodiment, the obtaining module is configured to:
send the second data access request to a mobile terminal corresponding to one of the searched-out or received Wifi address/addresses, herein the second data access request contains a caching address corresponding to one of the searched-out or received Wifi address/addresses; and receive data corresponding to the searched-out or received caching address from the mobile terminal corresponding to the one of the searched-out or received Wifi address/addresses.

In an exemplary embodiment, the storing module is further configured to:
receive a corresponding relationship from another mobile terminal in the local area network, and store the received corresponding relationship.

In an exemplary embodiment, the storing module is further configured to:
receive a message indicating that the corresponding relationship between the caching address of the deleted data, the access address and the Wifi address is deleted from another mobile terminal in the local area network, and delete the corresponding relationship, stored by itself, between the caching address of the deleted data, the Wifi address, the access address.

In an exemplary embodiment, the storing module is further configured to:
receive the request for obtaining the corresponding relationship between the Wifi address, the access address and the caching address from another mobile terminal in the local area network, and send the corresponding relationship, stored by itself, between the Wifi address, the access address and the caching address to a mobile terminal which sends the request for obtaining the corresponding relationship between the Wifi address, the access address and the caching address.

In an exemplary embodiment, the obtaining module is further configured to:
receive the request for obtaining the Wifi address and the caching address corresponding to the access address in the first data access request from another mobile terminal in the local area network, search the corresponding relationship, stored by itself, between the Wifi address, the access address and the caching address for the Wifi address and the caching address corresponding to the access address in the first data access request, and send the searched-out Wifi address and caching address corresponding to the access address in the first data access request to a mobile terminal which sends the request for obtaining the Wifi address and the caching address corresponding to the access address in the first data access request.

In an exemplary embodiment, the obtaining module is further configured to:
receive the caching address from another mobile terminal of the local area network, and send data corresponding to the caching address to the mobile terminal which sends the caching address.

In an exemplary embodiment, the storing module is further configured to:
receive a request for exiting the local area network from the user, and send the corresponding relationship stored by itself to any other mobile terminal in the local area network.

Also provided is a computer readable storage medium which has computer executable instructions stored therein, which, when executed, can carry out any method described above.

Compared with the current scheme, in the technical scheme of embodiments of the present invention, after a mobile terminal joins the local area network, when the first data access request is received from the user, if the Wifi address and the caching address corresponding to the access address in the first data access request cannot be obtained in all mobile terminals which join a local area network, the first data access request is sent to the network side; the received data from the network side is displayed or played; the received data is cached and the corresponding relationship between the Wifi address stored by itself, the access address in the first data access request and the caching address of the data is stored or the corresponding relationship is sent to the master control mobile terminal of the local area network. Through the scheme of embodiments of the present invention, the data obtained from the network side is cached, so as to be shared with other users in the local area network, thereby increasing the Internet speed of the users and improving the user experience.

After the accompanying drawings and detailed description are read and understood, other aspects can be understood.

### Brief Description of Drawings

FIG. 1 is a flow chart of a method of accessing data in accordance with an embodiment of the present invention; and
FIG. 2 is a block diagram of an apparatus of accessing data in accordance with an embodiment of the present invention.

### Detailed Description

Embodiments of the present invention will be described in detail below in conjunction with the accompanying drawings. It is should be noted that embodiments in the present application and features in the embodiments can be combined with each other arbitrarily without conflict.

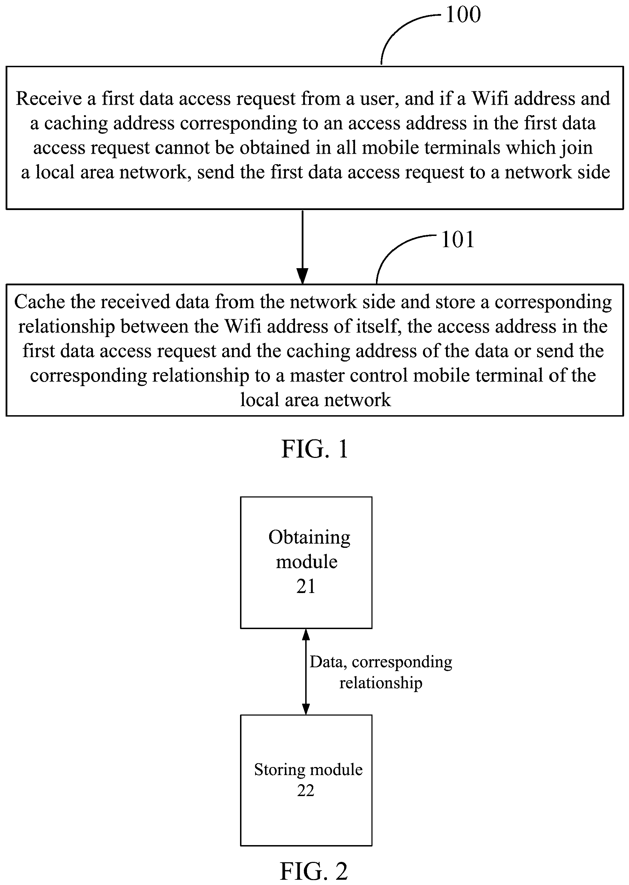

Referring to FIG. 1, an embodiment of the present invention provides a method of accessing data, including the following steps.

In step 100, a first data access request is received from a user, and if a wireless fidelity (Wifi) address and a caching address corresponding to an access address in the first data access request cannot be obtained in all mobile terminals which join a local area network, the first data access request is sent to a network side.

In the step, joining the local area network includes receiving a request for joining the local area network from the user and connecting a local area network address in the request for joining the local area network.

Or joining the local area network includes receiving a request for creating the local area network from the user and creating a local area network, a name of which is a local area network name in the request for creating the local area network.

The local area network may be created using a manner of establishing Wifi hot spots. After the local area network is created, a mobile terminal becomes automatically a master control mobile terminal. When the master control mobile terminal exits the local area network, the original master control mobile terminal may choose any one of the other mobile terminals in the local area network as a new master control mobile terminal.

In the step, that the Wifi address and the caching address corresponding to the access address in the first data access request cannot be obtained, is specifically:
A request for obtaining the corresponding relationship between the Wifi address, the access address and the caching address is sent to the master control mobile terminal of the local area network; and the corresponding relationship is received from the master control mobile terminal, and the Wifi address and the caching address corresponding to the access address in the first data access request cannot be found in the received corresponding relationship.

Or a request for obtaining the Wifi address and the caching address corresponding to the access address in the first data access request is sent to the master control mobile terminal of the local area network; and the Wifi address and the caching address are not received from the master control mobile terminal in a preset time period.

Or the Wifi address and the caching address corresponding to the access address in the first data access request cannot be found in the corresponding relationship, prestored by itself, between the Wifi address, the access address and the caching address.

Or the Wifi address and the caching address corresponding to the access address in the first data access request cannot be found in the corresponding relationship, prestored by itself, between the Wifi address, the access address and the caching address, and the request for obtaining the corresponding relationship is sent to all the other mobile terminals of the local area network; the corresponding relationships are received from all the other mobile terminals of the local area network, and the Wifi address and the caching address corresponding to the access address in the first data access request cannot be found in the received corresponding relationships.

Or the Wifi address and the caching address corresponding to the access address in the first data access request cannot be found in the corresponding relationship, prestored by itself, between the Wifi address, the access address and the caching address, and the request for obtaining the Wifi address and the caching address corresponding to the access address in the first data access request is sent to all the other control mobile terminal of the local area network; a message indicating that the Wifi addresses and the caching addresses cannot be found is received from all the other control mobile terminal of the local area network, or the found Wifi address/addresses and the caching address/addresses are not received from one or more of all the other mobile terminals in the preset time period.

In step 101, the received data from the network side is cached and the corresponding relationship between the Wifi address of itself, the access address in the first data access request and the caching address of the data is stored or the corresponding relationship is sent to the master control mobile terminal of the local area network.

In the step, the received data from the network side may be displayed or played.

For example, if the user is accessing web pages, then the data from the network side is displayed; if the user is accessing videos, then the data from the network side is played.

In the step, the data may be cached into a preset area without deleting the cached data. When another mobile terminal in the local area network accesses the same data, the cached data is sent to the mobile terminal which is to access the data, such that the mobile terminal which accesses the data does not obtain the data from the network side, thereby increasing the Internet speed of the user and improving the user experience.

In the step, the cached address may be a path by which the data is cached.

In the preset area, the cached data may be deleted in a first-in first-out manner, in order to ensure that the data will not overflow out of the preset area.

Through the scheme of the embodiment of the present invention, the data obtained from the network side is cached, so as to be shared with other users in the local area network, thereby increasing the Internet speed of the user and improving the user experience.

When it is determined that the cached data is deleted, the method further includes:
deleting the corresponding relationship between the caching address of the deleted data, the access address and the Wifi address, or sending a message indicating that the corresponding relationship between the caching address of the deleted data, the access address and the Wifi address is deleted to the master control mobile terminal.

When the master control mobile terminal is used and it is determined that one or more mobile terminals in the local area network exit the local area network, the method further includes:
deleting the corresponding relationship between the Wifi address of the mobile terminal which exits the local area network, the access address and the caching address.

After each of the mobile terminals joins the local area network, each mobile terminal has a corresponding Wifi address, each mobile terminal can send a surviving message to the master control mobile terminal to indicate that the mobile terminal is still present in the local area network. When the master control mobile terminal receives the surviving message of a certain mobile terminal in a preset time period, then it is determined that that the mobile terminal has exited the local area network.

When the Wifi address and the caching address corresponding to the access address in the first data access request are obtained in a mobile terminal of the local area network, the method further includes:
obtaining data corresponding to the access address according to the obtained Wifi address and caching address, and displaying or playing the obtained data.

Obtaining the Wifi address and the caching address corresponding to the access address in the first data access request includes:
sending the request for obtaining the corresponding relationship between the Wifi address, the access address and the caching address to the master control mobile terminal of the local area network; and receiving the corresponding relationship from the master control mobile terminal and searching the received corresponding relationship for the Wifi address and the caching address corresponding to the access address in the first data access request.

Or obtaining the Wifi address and the caching address corresponding to the access address in the first data access request includes:
sending the request for obtaining the Wifi address and the caching address corresponding to the access address in the first data access request to the master control mobile terminal of the local area network; and receiving the searched-out Wifi address and caching address from the master control mobile terminal.

When the Wifi address and the caching address corresponding to the access address in the first data access request are obtained using one of the two manners described above, obtaining the data corresponding to the access address according to the obtained Wifi address and the caching address includes:
when it is determined that the searched-out or received Wifi address is the Wifi address of itself, obtaining the data in the searched-out or received caching address.

When it is determined that the searched-out or received Wifi address is not the Wifi address of itself, obtaining the data corresponding to the access address according to the obtained Wifi address and caching address further includes:
sending a second data access request to a mobile terminal corresponding to the searched-out or received Wifi address, herein the second data access request contains the searched-out or received caching address; and receiving the data corresponding to the searched-out or received caching address from the mobile terminal corresponding to the searched-out or received Wifi address.

Or obtaining the Wifi address and the caching address corresponding to the access address in the first data access request includes:
searching the corresponding relationship, prestored by itself, between the Wifi address, the access address and the caching address for the Wifi address and the caching address corresponding to the access address in the first data access request;
obtaining the data corresponding to the access address according to the obtained Wifi address and caching address includes:
   obtaining the data in the searched-out caching address.

Or obtaining the Wifi address and the caching address corresponding to the access address in the first data access request includes:
if the Wifi address and the caching address corresponding to the access address in the first data access request cannot be found in the corresponding relationship, prestored by itself, between the Wifi address, the access address and the caching address, sending the request for obtaining the corresponding relationship to all the other mobile terminals of the local area network; and receiving the corresponding relationship from all the other mobile terminals of the local area network, and searching the received corresponding relationships for the Wifi address and the caching address corresponding to the access address in the first data access request.

Or obtaining the Wifi address and the caching address corresponding to the access address in the first data access request includes:
if the Wifi address and the caching address corresponding to the access address in the first data access request cannot be found in the corresponding relationship, prestored by itself, between the Wifi address, the access address and the caching address, sending the request for obtaining the Wifi address and the caching address corresponding to the access address in the first data access request to all the other mobile terminals of the local area network; and receiving the searched-out Wifi address/addresses and caching address/addresses from one or more of all the other mobile terminals of the local area network.

Obtaining the data corresponding to the access address according to the obtained Wifi address and caching address includes:
sending the second data access request to a mobile terminal corresponding to one of the searched-out or received Wifi address/addresses, herein the second data access request contains a caching address corresponding to one of the searched-out or received Wifi address/addresses; and
receiving data corresponding to the searched-out or received caching address from the mobile terminal corresponding to the one of the searched-out or received Wifi address/ addresses.

When the corresponding relationship is received from another mobile terminal in the local area network, the method further includes:
storing the received corresponding relationship.

When the message indicating that the corresponding relationship between the caching address of the deleted data, the access address and the Wifi address is deleted is received from another mobile terminal in the local area network, the method further includes:
deleting the corresponding relationship, stored by itself, between the caching address of the deleted data, the Wifi address, the access address.

When the request for obtaining the corresponding relationship between the Wifi address, the access address and the caching address is received from another mobile terminal in the local area network, the method further includes:
sending the corresponding relationship, stored by itself, between the Wifi address, the access address and the caching address to a mobile terminal which sends the request for obtaining the corresponding relationship between the Wifi address, the access address and the caching address.

When the request for obtaining the Wifi address and the caching address corresponding to the access address in the first data access request is received from another mobile terminal in the local area network, the method further includes:
searching the corresponding relationship, stored by itself, between the Wifi address, the access address and the caching address for the Wifi address and the caching address corresponding to the access address in the first data access request, and sending the searched-out Wifi address and caching address corresponding to the access address in the first data access request to a mobile terminal which sends the request for obtaining the Wifi address and caching address corresponding to the access address in the first data access request.

When the caching address is received from another mobile terminal of the local area network, the method further includes:
sending data corresponding to the caching address to the mobile terminal which sends the caching address.

When the master control mobile terminal of the local area network is used and a request for exiting the local area network is received from the user, the method further includes:
sending the corresponding relationship stored by itself to any other mobile terminal in the local area network.

A mobile terminal, which has received the corresponding relationship, stores the received corresponding relationship, creates a new local area network and adds mobile terminals in the original local area network to the new local area network.

The embodiment of the present invention further provides a computer readable storage medium having computer executable instructions stored therein, which, when executed, can carry out the method of accessing data described above.

Description will be made by several embodiments.

In the following embodiments, assuming that a mobile terminal 1 does not find an existing local area network, but creates a new local area network and becomes a master control mobile terminal of the created local area network, and that a mobile terminal 2 and a mobile terminal 3 find the local area network created by the mobile terminal 1 and join the local area network.

In the first embodiment, a user clicks a web page or video for browsing on the mobile terminal 2, i.e., the mobile terminal 2 receives a first data access request from the user, the first data access request contains an access address (i.e., a web page address or video address).

The mobile terminal 2 sends a request for obtaining a corresponding relationship between a Wifi address, an access address and a caching address to the mobile terminal 1, the mobile terminal 1 sends the corresponding relationship stored by itself between the Wifi address, the access address and the caching address to the mobile terminal 2.

When the mobile terminal 2 searches the received corresponding relationship for the Wifi address and the caching address corresponding to the access address in the first data access request, the mobile terminal 2 determines that the found Wifi address is the Wifi address of the mobile terminal 2, obtains data in the found caching address and plays or displays the obtained data.

When the mobile terminal 2 determines that the found Wifi address is not the Wifi address of the mobile terminal 2, the mobile terminal 2 sends a second data access request to the mobile terminal 3 corresponding to the found Wifi address, the second data access request contains the found caching address. The mobile terminal 3 sends data corresponding to the caching address in the second data access request to the mobile terminal 2, the mobile terminal 2 displays or plays the received data.

When the mobile terminal 2 cannot find the Wifi address and the caching address corresponding to the access address in the first data access request in the received corresponding relationship, the mobile terminal 2 sends the first data access request to the network side, displays or plays the received data from the network side, caches the received data, and sends the corresponding relationship between the Wifi address of the mobile terminal 2 itself, the access address in the first data access request and the caching address of the data to the mobile terminal 1, the mobile terminal 1 stores the received corresponding relationship.

When certain cached data in the mobile terminal 2 is deleted, the mobile terminal 2 sends a message indicating that the corresponding relationship between the caching address of the deleted data, the access address and the Wifi address is deleted to the mobile terminal 1, the mobile terminal 1 deletes the corresponding relationship stored by itself between the caching address of the deleted data, the Wifi address and the access address.

In the second embodiment, the user clicks a web page or video for browsing on the mobile terminal 1, i.e., the mobile terminal 1 receives the first data access request from the user, the first data access request contains the access address (i.e., the web page address or video address).

When the mobile terminal 1 searches the corresponding relationship stored by itself between the Wifi address, the access address and the caching address for the Wifi address and the caching address corresponding to the access address in the first data access request, the mobile terminal 1 determines that the found Wifi address is the Wifi address of the mobile terminal 1, obtains data in the found caching address and displays or plays the obtained data.

When the mobile terminal 1 determines that the found Wifi address is not the Wifi address of the mobile terminal 1, the mobile terminal 1 sends the second data access request to the mobile terminal 3 corresponding to the found Wifi address, the second data access request contains the found caching address. The mobile terminal 3 sends the data corresponding to the caching address in the second data access request to the mobile terminal 1, the mobile terminal 1 displays or plays the received data.

When the mobile terminal 1 cannot find the Wifi address and the caching address corresponding to the access address in the first data access request in the corresponding relationship stored by itself, the mobile terminal 1 sends the first data access request to the network side, displays or plays the received data from the network side, caches the received data, and stores the corresponding relationship between the Wifi address of the mobile terminal 1 itself, the access address in the first data access request and the caching address of the data.

When certain cached data in the mobile terminal 1 is deleted, the mobile terminal 1 deletes the corresponding relationship between the caching address of the deleted data, the Wifi address and the access address.

In the third embodiment, the user clicks a web page or video for browsing on the mobile terminal 2, i.e., the mobile terminal 2 receives the first data access request from the user, the first data access request contains the access address (i.e., the web page address or video address).

The mobile terminal 2 sends a request for obtaining the Wifi address and the caching address corresponding to the access address in the first data access request to the mobile terminal 1, the mobile terminal 1 searches the corresponding relationship stored by itself between the Wifi address, the access address and the caching address for the Wifi address and the caching address corresponding to the access address in the first data access request, and sends the found Wifi address and caching address to the mobile terminal 2.

When the mobile terminal 2 determines that the received Wifi address is the Wifi address of the mobile terminal 2, the mobile terminal 2 obtains the data in the received caching address and displays or plays the obtained data.

When the mobile terminal 2 determines that the received Wifi address is not the Wifi address of the mobile terminal 2, the mobile terminal 2 sends the second data access request to the mobile terminal 3 corresponding to the received Wifi address, the second data access request contains the found caching address. The mobile terminal 3 sends the data corresponding to the caching address in the second data access request to the mobile terminal 2, which displays or plays the received data.

When the mobile terminal 1 cannot find the Wifi address and the caching address corresponding to the access address in the first data access request in the corresponding relationship stored by itself, the mobile terminal 1 sends a message indicating that the Wifi address and the caching address cannot be found to the mobile terminal 2, the mobile terminal 2 sends the first data access request to the network side, displays or plays the received data from the network side, caches the received data, and sends the corresponding relationship between the Wifi address of the mobile terminal 2 itself, the access address in the first data access request and the caching address of the data to the mobile terminal 1, the mobile terminal 1 stores the received corresponding relationship.

When certain cached data in the mobile terminal 2 is deleted, the mobile terminal 2 sends a message indicating that the corresponding relationship between the caching address of the deleted data, the access address and the Wifi address is deleted to the mobile terminal 1, the mobile terminal 1 deletes the corresponding relationship stored by itself between the caching address of the deleted data, the Wifi address and the access address.

In the fourth embodiment, the user clicks a web page or video for browsing on the mobile terminal 2, i.e., the mobile terminal 2 receives the first data access request from the user, the first data access request contains the access address (i.e., the web page address or video address).

The mobile terminal 2 searches the corresponding relationship stored by itself between the Wifi address, the access address and the caching address for the Wifi address and the caching address corresponding to the access address in the first data access request, obtains the data in the found caching address and displays or plays the obtained data

When the mobile terminal 2 cannot find the Wifi address and the caching address corresponding to the access address in the first data access request in the corresponding relationship stored by itself, the mobile terminal 2 sends the request for obtaining the corresponding relationship to all the other mobile terminals in the local area network; all the other mobile terminals in the local area network send the corresponding relationships stored by themselves to the mobile terminal 2. The mobile terminal 2 searches the received corresponding relationships for the Wifi address and the caching address corresponding to the access address in the first data access request, and sends the second data access request to the mobile terminal 3 corresponding to the found Wifi address, the second data access request contains the found caching address. The mobile terminal 3 sends the data corresponding to the caching address in the second data access request to the mobile terminal 2, the mobile terminal 2 displays or plays the received data.

When the mobile terminal 2 cannot find the Wifi address and the caching address corresponding to the access address in the first data access request in the received corresponding relationships, the mobile terminal 2 sends the first data access request to the network side, displays or plays the received data from the network side, caches the received data, and stores the corresponding relationship between the Wifi address of the mobile terminal 2 itself, the access address in the first data access request and the caching address of the data.

When certain cached data in the mobile terminal 2 is deleted, the mobile terminal 2 deletes the corresponding relationship between the caching address of the deleted data, the Wifi address and the access address.

In the fifth embodiment, the user clicks a web page or video for browsing on the mobile terminal 2, i.e., the mobile terminal 2 receives the first data access request from the user, the first data access request contains the access address (i.e., the web page address or video address).

The mobile terminal 2 searches the corresponding relationship stored by itself between the Wifi address, the access address and the caching address for the Wifi address and the caching address corresponding to the access address in the first data access request, obtains the data in the found caching address and displays or plays the obtained data

When the mobile terminal 2 cannot find the Wifi address and the caching address corresponding to the access address in the first data access request in the corresponding relationship stored by itself, the mobile terminal 2 sends the request for obtaining the Wifi address and the caching address corresponding to the access address in the first data access request to all the other mobile terminals in the local area network; all the other mobile terminals in the local area network search the corresponding relationships stored by themselves for the Wifi address and the caching address corresponding to the access address in the first data access request, and send, if found, the found Wifi address and the caching address to the mobile terminal 2. The mobile terminal 2 sends the second data access request to the mobile terminal 3 corresponding to the received Wifi address, the second data access request contains the received caching address. The mobile terminal 3 sends the data corresponding to the caching address in the second data access request to the mobile terminal 2, the mobile terminal 2 displays or plays the received data.

When all the other mobile terminals in the local area network cannot find the Wifi address and the caching address corresponding to the access address in the first data access request in the corresponding relationships stored by themselves, all the other mobile terminals in the local area network do not send any message to the mobile terminal 2. The mobile terminal 2 receives the message indicating that the Wifi address and the caching address cannot be found from all the other mobile terminals in the local area network, or sends the first data access request to the network side when the Wifi address and the caching address corresponding to the access address in the first data access request are not received within the preset time period, displays or plays the received data from the network side, caches the received data, and stores the corresponding relationship between the Wifi address of the mobile terminal 2 itself, the access address in the first data access request and the caching address of the data.

When certain cached data in the mobile terminal 2 is deleted, the mobile terminal 2 deletes the corresponding relationship between the caching address of the deleted data, the Wifi address and the access address.

Referring to FIG. 2, an embodiment of the present invention provides an apparatus of accessing data, including at least:
an obtaining module 21 configured to receive a first data access request from a user, and if a Wifi address and a caching address corresponding to an access address in the first data access request cannot be obtained in all mobile terminals which join a local area network, send the first data access request to a network side; and
a storing module 22 configured to cache received data from the network side and store a corresponding relationship between a Wifi address of itself, the access address in the first data access request and a caching address of the data or send the corresponding relationship to a master control mobile terminal of the local area network.

In the apparatus in accordance with the embodiment of the present invention, the storing module 22 is further configured to:
when determining that cached data cached by itself is deleted, delete a corresponding relationship between a caching address of the deleted data, the access address and the Wifi address, or send a message indicating that a corresponding relationship between a caching address of the deleted data, the access addresses and the Wifi address is deleted to the master control mobile terminal.

In the apparatus in accordance with the embodiment of the present invention, the storing module 22 is further configured to:
when determining that one or more mobile terminals in the local area network exit the local area network, delete a corresponding relationship between a Wifi address of a mobile terminal which exits the local area network, the access address and the caching address.

In the apparatus in accordance with the embodiment of the present invention, the obtaining module 21 is further configured to:
when obtaining the Wifi address and the caching address corresponding to the access address in the first data access request in a mobile terminal of the local area network, obtain data corresponding to the access address according to the obtained Wifi address and caching addresses.

In the apparatus in accordance with the embodiment of the present invention, the obtaining module 21 is configured to:
send a request for obtaining the corresponding relationship between a Wifi address, a access address and a caching address to the master control mobile terminal of the local area network; and receive a corresponding relationship from the master control mobile terminal and search the received corresponding relationship for the Wifi address and the caching address corresponding to the access address in the first data access request includes.

In the apparatus in accordance with the embodiment of the present invention, the obtaining module 21 is configured to:
send a request for obtaining a Wifi address and a caching address corresponding to the access address in the first data access request to the master control mobile terminal of the local area network; and receive the searched-out Wifi address and caching address from the master control mobile terminal.

In the apparatus in accordance with the embodiment of the present invention, the obtaining module 21 is configured to:
when it is determined that the searched-out or received Wifi address is the Wifi address of itself, obtain the data in the searched-out or received caching address.

In the apparatus in accordance with the embodiment of the present invention, the obtaining module 21 is further configured to:
when it is determined that the searched-out or received Wifi address is not the Wifi address of itself, send a second data access request to a mobile terminal corresponding to the searched-out or received Wifi address, herein the second data access request contains the searched-out or received caching address; and receive data corresponding to the searched-out or received caching address from the mobile terminals corresponding to the searched-out or received Wifi address.

In the apparatus in accordance with the embodiment of the present invention, the obtaining module 21 is configured to:
search the corresponding relationship, prestored by itself, between the Wifi address, the access address and the caching address for the Wifi address and the caching address corresponding to the access address in the first data access request; and obtain the data in the searched-out caching addresses.

In the apparatus in accordance with the embodiment of the present invention, the obtaining module 21 is configured to:
if the Wifi address and the caching address corresponding to the access address in the first data access request cannot be found in the corresponding relationship, prestored by itself, between the Wifi address, the access address and the caching address, send a request for obtaining the corresponding relationship to all the other mobile terminals of the local area network; and receive corresponding relationships from all the other mobile terminals of the local area network, and search the received corresponding relationships for the Wifi address and the caching address corresponding to the access address in the first data access request.

In the apparatus in accordance with the embodiment of the present invention, the obtaining module 21 is configured to:
if the Wifi address and the caching address corresponding to the access address in the first data access request cannot be found in the corresponding relationship, prestored by itself, between the Wifi address, the access address and the caching address, send the request for obtaining the Wifi address and the caching address corresponding to the access address in the first data access request to all the other mobile terminals of the local area network; and receive the searched-out Wifi address/addresses and caching address/addresses from one or more of all the other mobile terminals of the local area network.

In the apparatus in accordance with the embodiment of the present invention, the obtaining module 21 is configured to:
send the second data access request to a mobile terminal corresponding to one of the searched-out or received Wifi address/addresses, herein the second data access request contains a caching address corresponding to one of the searched-out or received Wifi address/addresses; and receive data corresponding to the searched-out or received caching address from the mobile terminal corresponding to the one of the searched-out or received Wifi address/addresses.

In the apparatus in accordance with the embodiment of the present invention, the storing module 22 is further configured to:
receive a corresponding relationship from another mobile terminal in the local area network, and store the received corresponding relationship.

In the apparatus in accordance with the embodiment of the present invention, the storing module 22 is further configured to:
receive a message indicating that the corresponding relationship between the caching address of the deleted data, the access address and the Wifi address is deleted from another mobile terminal in the local area network, and delete the corresponding relationship, stored by itself, between the caching address of the deleted data, the Wifi address, the access address.

In the apparatus in accordance with the embodiment of the present invention, the storing module 22 is further configured to:
receive the request for obtaining the corresponding relationship between the Wifi address, the access address and the caching address from another mobile terminal in the local area network, and send the corresponding relationship, stored by itself, between the Wifi address, the access address and the caching address to a mobile terminal which sends the request for obtaining the corresponding relationship between the Wifi address, the access address and the caching address.

In the apparatus in accordance with the embodiment of the present invention, the obtaining module 21 is further configured to:
receive the request for obtaining the Wifi address and the caching address corresponding to the access address in the first data access request from another mobile terminal in the local area network, search the corresponding relationship, stored by itself, between the Wifi address, the access address and the caching address for the Wifi address and the caching address corresponding to the access address in the first data access request, and send the searched-out Wifi address and caching address corresponding to the access address in the first data access request to a mobile terminal which sends the request for obtaining the Wifi address and the caching address corresponding to the access address in the first data access request.

In the apparatus in accordance with the embodiment of the present invention, the obtaining module 21 is further configured to:
receive the caching address from another mobile terminal of the local area network, and send data corresponding to the caching address to the mobile terminal which sends the caching address.

In the apparatus in accordance with the embodiment of the present invention, the storing module 22 is further configured to:
receive a request for exiting the local area network from the user, and send the corresponding relationship stored by itself to any other mobile terminal in the local area network.

People having ordinary skill in the art may understand that all or part of steps in the embodiments described above can be carried out using a flow of computer programs, which can be stored in a computer readable storage medium and executed on corresponding hardware platforms (such as systems, devices, apparatuses, appliances, etc.). The computer programs, when executed, include one or a combination of the steps of the method embodiment.

Alternatively, all or part of steps in the embodiments described above can be carried out using integrated circuits. These steps can be implemented by making them one by one into individual integrated circuit modules or by making a plurality of modules thereof into a single integrated circuit module.

Apparatuses/functional modules/functional units in the embodiments described above, which can be implemented by using general computing apparatuses, can be centralized on a single computing apparatus or distributed across a network formed by multiple computing apparatus.

Apparatuses/functional modules/functional units in the embodiments described above, when implemented in a form of software functional module and sold or used as stand-stone products, can be stored in a computer readable storage medium. The computer readable storage medium mentioned above may be read-only memory, a magnetic disk or an optical disk.

It should be noted that the embodiments described above are used to make the present invention easier to be understood by those skilled in the art, and not used to limit the protection scope of the present invention. Any obvious substitution and improvement made to the present invention by those skilled in the art is in the protection scope of the present invention without departing from the premise of the inventive concept of the present invention.

### Industrial Applicability

Through the embodiments of the present invention, the data obtained from the network side is cached, so as to be shared with other users in the local area network, thereby increasing the Internet speed of users and improving the user experience.

## Claims

1. A method of accessing data, wherein the method is implemented by a mobile terminal and comprises:
receiving a first data access request from a user, and when a wireless fidelity (Wifi) address and a caching address corresponding to an access address in the first data access request cannot be obtained in all mobile terminals which join a local area network, sending the first data access request to a network side (100); and
caching received data from the network side, and storing a corresponding relationship between a Wifi address of the mobile terminal itself, the access address in the first data access request, and a caching address of the data or sending the corresponding relationship to a master control mobile terminal of the local area network (101),
wherein when obtaining the Wifi address and the caching address corresponding to the access address in the first data access request in a mobile terminal of the local area network, the method further comprises:
obtaining data corresponding to the access address according to the obtained Wifi address and caching address,
wherein obtaining the Wifi address and the caching address corresponding to the access address in the first data access request comprises:
sending a request for obtaining a corresponding relationship between a Wifi address, a access address and a caching address to the master control mobile terminal of the local area network; and receiving a corresponding relationship from the master control mobile terminal and searching the received corresponding relationship for the Wifi address and the caching address corresponding to the access address in the first data access request; or
sending a request for obtaining a Wifi address and a caching address corresponding to the access address in the first data access request to the master control mobile terminal of the local area network; and receiving the searched-out Wifi address and caching address from the master control mobile terminal; or
searching the corresponding relationship prestored by the mobile terminal itself between the Wifi address, the access address and the caching address for the Wifi address and the caching address corresponding to the access address in the first data access request; or
when the Wifi address and the caching address corresponding to the access address in the first data access request cannot be found in the corresponding relationship prestored by the mobile terminal itself between the Wifi address, the access address and the caching address, sending a request for obtaining the corresponding relationship to all the other mobile terminals of the local area network; and receiving corresponding relationships from all the other mobile terminals of the local area network, and searching the received corresponding relationships for the Wifi address and the caching address corresponding to the access address in the first data access request; or
when the Wifi address and the caching address corresponding to the access address in the first data access request cannot be found in the corresponding relationship prestored by the mobile terminal itself between the Wifi address, the access address and the caching address, sending the request for obtaining the Wifi address and the caching address corresponding to the access address in the first data access request to all the other mobile terminals of the local area network; and receiving the searched-out Wifi address/addresses and caching address/addresses from one or more of all the other mobile terminals of the local area network.

2. The method according to claim 1, wherein when it is determined that data cached by the mobile terminal itself is deleted, the method further comprises:
deleting a corresponding relationship between a caching address of the deleted data, the access address and the Wifi address, or sending a message indicating that a corresponding relationship between the caching address of the deleted data, the access address and the Wifi address is deleted to the master control mobile terminal.

3. The method according to claim 1, wherein when it is determined that one or more mobile terminals in the local area network exit the local area network, the method further comprises:
deleting a corresponding relationship between a Wifi address of a mobile terminal which exits the local area network, the access address and a caching address.

4. The method according to claim 1, wherein obtaining the data corresponding to the access address according to the obtained Wifi address and caching address comprises:
when it is determined that the searched-out or received Wifi address is the Wifi address of the mobile terminal itself, obtaining data in the searched-out or received caching address,
wherein when it is determined that the searched-out or received Wifi address is not the Wifi address of the mobile terminal itself, obtaining the data corresponding to the access address according to the obtained Wifi address and caching address comprises:
sending a second data access request to a mobile terminal corresponding to the searched-out or received Wifi address, wherein the second data access request contains the searched-out or received caching address; and
receiving data corresponding to the searched-out or received caching address from the mobile terminal corresponding to the searched-out or received Wifi address.

5. The method according to claim 1, wherein obtaining the data corresponding to the access address according to the obtained Wifi address and caching address comprises:
obtaining data in the searched-out caching address.

6. The method according to claim 1, wherein obtaining the data corresponding to the access address according to the obtained Wifi address and caching address comprises:
sending the second data access request to a mobile terminal corresponding to one of the searched-out or received Wifi address/addresses, wherein the second data access request contains a caching address corresponding to one of the searched-out or received Wifi address/addresses; and
receiving data corresponding to the searched-out or received caching address from the mobile terminal corresponding to the one of the searched-out or received Wifi address/addresses.

7. The method according to any one of claims 1-3, wherein when a corresponding relationship is received from another mobile terminal in the local area network, the method further comprises:
storing the received corresponding relationship.

8. The method according to any one of claims 1-3, wherein when a message indicating that the corresponding relationship between the caching address of the deleted data, the access address and the Wifi address is deleted is received from another mobile terminal in the local area network, the method further comprises:
deleting the corresponding relationship, stored by the mobile terminal itself, between the caching address of the deleted data, the Wifi address, the access address.

9. The method according to any one of claims 1-3, wherein when the request for obtaining the corresponding relationship between the Wifi address, the access address and the caching address is received from another mobile terminal in the local area network, the method further comprises:
sending the corresponding relationship, stored by the mobile terminal itself, between the Wifi address, the access address and the caching address to a mobile terminal which sends the request for obtaining the corresponding relationship between the Wifi address, the access address and the caching address.

10. The method according to any one of claims 1-3, wherein when the request for obtaining the Wifi address and the caching address corresponding to the access address in the first data access request is received from another mobile terminal in the local area network, the method further comprises:
searching the corresponding relationship, stored by the mobile terminal itself, between the Wifi address, the access address and the caching address for the Wifi address and the caching address corresponding to the access address in the first data access request, and sending the searched-out Wifi address and caching address corresponding to the access address in the first data access request to a mobile terminal which sends the request for obtaining the Wifi address and the caching address corresponding to the access address in the first data access request.

11. The method according to any one of claims 1-3, wherein when the caching address is received from another mobile terminal of the local area network, the method further comprises:
sending data corresponding to the caching address to the mobile terminal which sends the caching address.

12. The method according to any one of claims 1-3, wherein when the mobile terminal is used as the master control mobile terminal of the local area network and receives a request for exiting the local area network from the user, the method further comprises:
sending the corresponding relationship stored by the mobile terminal itself to any other mobile terminal in the local area network.

13. An apparatus of accessing data, comprising:
an obtaining module configured to receive a first data access request from a user, and when a wireless fidelity (Wifi) address and a caching address corresponding to an access address in the first data access request cannot be obtained in all mobile terminals which join a local area network, send the first data access request to a network side; and
a storing module configured to cache received data from the network side and store a corresponding relationship between a Wifi address of a mobile terminal itself, the access address in the first data access request and a caching address of the data or send the corresponding relationship to a master control mobile terminal of the local area network,
wherein when the Wifi address and the caching address corresponding to the access address in the first data access request can be obtained in a mobile terminal of the local area network, the obtaining module is further configured to:
obtain data corresponding to the access address according to the obtained Wifi address and caching address,
wherein that the Wifi address and the caching address corresponding to the access address in the first data access request can be obtained comprises:
a request for obtaining a corresponding relationship between a Wifi address, a access address and a caching address to the master control mobile terminal of the local area network is sent; and a corresponding relationship from the master control mobile terminal and searching the received corresponding relationship for the Wifi address and the caching address corresponding to the access address in the first data access request is received; or
a request for obtaining a Wifi address and a caching address corresponding to the access address in the first data access request to the master control mobile terminal of the local area network is sent; and searched-out Wifi address and caching address from the master control mobile terminal are received; or
the Wifi address and the caching address corresponding to the access address in the first data access request is searched in the corresponding relationship prestored by the mobile terminal itself between the Wifi address, the access address and the caching address; or
when the Wifi address and the caching address corresponding to the access address in the first data access request cannot be found in the corresponding relationship prestored by the mobile terminal itself between the Wifi address, the access address and the caching address, a request for obtaining the corresponding relationship is sent to all the other mobile terminals of the local area network; and corresponding relationships are received from all the other mobile terminals of the local area network, and the Wifi address and the caching address corresponding to the access address in the first data access request is searched in the received corresponding relationships; or
when the Wifi address and the caching address corresponding to the access address in the first data access request cannot be found in the corresponding relationship prestored by the mobile terminal itself between the Wifi address, the access address and the caching address, the request for obtaining the Wifi address and the caching address corresponding to the access address in the first data access request is sent to all the other mobile terminals of the local area network; and the searched-out Wifi address/addresses and caching address/addresses are received from one or more of all the other mobile terminals of the local area network.

## Patentansprüche

1. Verfahren zum Zugreifen auf Daten, wobei
das Verfahren von einem mobilen Endgerät implementiert wird und Folgendes umfasst:
Empfangen einer ersten Datenzugriffsanforderung von einem Benutzer, und wenn eine Wireless-Fidelity-Adresse (Wifi) und eine Zwischenspeicher-Adresse, die einer Zugriffsadresse in der ersten Datenzugriffsanforderung entspricht, nicht in allen mobilen Endgeräten, die sich einem lokalen Netzwerk anschließen, erlangt werden können, Senden der ersten Datenzugriffsanforderung an eine Netzwerkseite (100); und
Zwischenspeichern von empfangenen Daten von der Netzwerkseite und Speichern einer entsprechenden Beziehung zwischen einer Wifi-Adresse des mobilen Endgeräts selbst, der Zugriffsadresse in der ersten Datenzugriffsanforderung und einer Zwischenspeicher-Adresse der Daten oder Senden der entsprechenden Beziehung an ein mobiles Mastersteuerendgerät des lokalen Netzwerks (101),
wobei beim Erlangen der Wifi-Adresse und der Zwischenspeicher-Adresse, die der Zugriffsadresse in der ersten Datenzugriffsanforderung in einem mobilen Endgerät des lokalen Netzwerks entspricht, das Verfahren ferner Folgendes umfasst:
Erlangen von Daten, die der Zugriffsadresse gemäß der erlangten Wifi-Adresse und Zwischenspeicher-Adresse entsprechen,
wobei ein Erlangen der Wifi-Adresse und der Zwischenspeicher-Adresse, die der Zugriffsadresse in der ersten Datenzugriffsanforderung entspricht, Folgendes umfasst:
Senden einer Anforderung zum Erlangen einer entsprechenden Beziehung zwischen einer Wifi-Adresse, einer Zugriffsadresse und einer Zwischenspeicher-Adresse an das mobile Mastersteuerendgerät des lokalen Netzwerks; und Empfangen einer entsprechenden Beziehung von dem mobilen Mastersteuerendgerät und Durchsuchen der empfangenen entsprechenden Beziehung nach der Wifi-Adresse und der Zwischenspeicher-Adresse, die der Zugriffsadresse in der ersten Datenzugriffsanforderung entspricht; oder
Senden einer Anforderung zum Erlangen einer Wifi-Adresse und einer Zwischenspeicher-Adresse, die der Zugriffsadresse in der ersten Datenzugriffsanforderung entspricht, an das mobile Mastersteuerendgerät des lokalen Netzwerks; und Empfangen der herausgesuchten Wifi-Adresse und Zwischenspeicher-Adresse von dem mobilen Mastersteuerendgerät; oder
Durchsuchen der entsprechenden Beziehung zwischen der Wifi-Adresse, der Zugriffsadresse und der Zwischenspeicher-Adresse, die von dem mobilen Endgerät selbst vorgespeichert wird, nach der Wifi-Adresse und der Zwischenspeicher-Adresse, die der Zugriffsadresse in der ersten Datenzugriffsanforderung entspricht; oder
wenn die Wifi-Adresse und die Zwischenspeicher-Adresse, die der Zugriffsadresse in der ersten Datenzugriffsanforderung entspricht, in der entsprechenden Beziehung zwischen der Wifi-Adresse, der Zugriffsadresse und der Zwischenspeicher-Adresse, die von dem mobilen Endgerät selbst vorgespeichert wird, nicht gefunden werden können, Senden einer Anforderung zum Erlangen der entsprechenden Beziehung an alle anderen mobilen Endgeräte des lokalen Netzwerks; und Empfangen entsprechender Beziehungen von allen anderen mobilen Endgeräten des lokalen Netzwerks und Durchsuchen der empfangenen entsprechenden Beziehungen nach der Wifi-Adresse und der Zwischenspeicher-Adresse, die der Zugriffsadresse in der ersten Datenzugriffsanforderung entspricht; oder
wenn die Wifi-Adresse und die Zwischenspeicher-Adresse, die der Zugriffsadresse in der ersten Datenzugriffsanforderung entspricht, in der entsprechenden Beziehung zwischen der Wifi-Adresse, der Zugriffsadresse und der Zwischenspeicher-Adresse, die von dem mobilen Endgerät selbst vorgespeichert wird, nicht gefunden werden können, Senden der Anforderung zum Erlangen der Wifi-Adresse und der Zwischenspeicher-Adresse, die der Zugriffsadresse in der ersten Datenzugriffsanforderung entspricht, an alle anderen mobilen Endgeräte des lokalen Netzwerks; und Empfangen der herausgesuchten Wifi-Adresse(n) und Zwischenspeicher-Adresse(n) von einem oder mehreren von allen anderen mobilen Endgeräten des lokalen Netzwerks.

2. Verfahren nach Anspruch 1, wobei, wenn bestimmt wird, dass Daten, die von dem mobilen Endgerät selbst zwischengespeichert werden, gelöscht werden, das Verfahren ferner Folgendes umfasst:
Löschen einer entsprechenden Beziehung zwischen einer Zwischenspeicher-Adresse der gelöschten Daten, der Zugriffsadresse und der Wifi-Adresse oder Senden einer Nachricht, die anzeigt, dass eine entsprechende Beziehung zwischen der Zwischenspeicher-Adresse der gelöschten Daten, der Zugriffsadresse und der Wifi-Adresse gelöscht wird, an das mobile Mastersteuerendgerät.

3. Verfahren nach Anspruch 1, wobei, wenn bestimmt wird, dass eines oder mehrere mobile Endgeräte in dem lokalen Netzwerk das lokale Netzwerk verlassen, das Verfahren ferner Folgendes umfasst:
Löschen einer entsprechenden Beziehung zwischen einer Wifi-Adresse eines mobilen Endgeräts, das das lokale Netzwerk verlässt, der Zugriffsadresse und einer Zwischenspeicher-Adresse.

4. Verfahren nach Anspruch 1, wobei ein Erlangen der Daten, die der Zugriffsadresse entsprechen, gemäß der erlangten Wifi-Adresse und Zwischenspeicher-Adresse Folgendes umfasst:
wenn bestimmt wird, dass die herausgesuchte oder empfangene Wifi-Adresse die Wifi-Adresse des mobilen Endgeräts selbst ist, Erlangen von Daten in der herausgesuchten oder empfangenen Zwischenspeicher-Adresse,
wobei, wenn bestimmt wird, dass die herausgesuchte oder empfangene Wifi-Adresse nicht die Wifi-Adresse des mobilen Endgeräts selbst ist, das Erlangen der Daten, die der Zugriffsadresse entsprechen, gemäß der erlangten Wifi-Adresse und Zwischenspeicher-Adresse Folgendes umfasst:
Senden einer zweiten Datenzugriffsanforderung an ein mobiles Endgerät, das der herausgesuchten oder empfangenen Wifi-Adresse entspricht, wobei die zweite Datenzugriffsanforderung die herausgesuchte oder empfangene Zwischenspeicher-Adresse enthält; und
Empfangen von Daten, die der herausgesuchten oder empfangenen Zwischenspeicher-Adresse entsprechen, von dem mobilen Endgerät, das der herausgesuchten oder empfangenen Wifi-Adresse entspricht.

5. Verfahren nach Anspruch 1, wobei ein Erlangen der Daten, die der Zugriffsadresse gemäß der erlangten Wifi-Adresse und Zwischenspeicher-Adresse entsprechen, Folgendes umfasst:
Erlangen von Daten in der herausgesuchten Zwischenspeicher-Adresse.

6. Verfahren nach Anspruch 1, wobei ein Erlangen der Daten, die der Zugriffsadresse gemäß der erlangten Wifi-Adresse und Zwischenspeicher-Adresse entsprechen, Folgendes umfasst:
Senden der zweiten Datenzugriffsanforderung an ein mobiles Endgerät, das einer der herausgefundenen oder empfangenen Wifi-Adresse(n) entspricht, wobei die zweite Datenzugriffsanforderung eine Zwischenspeicher-Adresse enthält, die einer der herausgesuchten oder empfangenen Wifi-Adresse(n) entspricht; und
Empfangen von Daten, die der herausgesuchten oder empfangenen Zwischenspeicher-Adresse entsprechen, von dem mobilen Endgerät, das der einen der herausgefundenen oder empfangenen Wifi-Adresse(n) entspricht.

7. Verfahren nach einem der Ansprüche 1-3, wobei, wenn eine entsprechende Beziehung von einem anderen mobilen Endgerät in dem lokalen Netzwerk empfangen wird, das Verfahren ferner Folgendes umfasst:
Speichern der empfangenen entsprechenden Beziehung.

8. Verfahren nach einem der Ansprüche 1-3, wobei, wenn eine Nachricht, die anzeigt, dass die entsprechende Beziehung zwischen der Zwischenspeicher-Adresse der gelöschten Daten, der Zugriffsadresse und der Wifi-Adresse gelöscht wird, von einem anderen mobilen Endgerät in dem lokalen Netzwerk empfangen wird, das Verfahren ferner Folgendes umfasst:
Löschen der entsprechenden Beziehung zwischen der Zwischenspeicher-Adresse der gelöschten Daten, der Wifi-Adresse, der Zugriffsadresse, die von dem mobilen Endgerät selbst gespeichert wird.

9. Verfahren nach einem der Ansprüche 1-3, wobei, wenn die Anforderung zum Erlangen der entsprechenden Beziehung zwischen der Wifi-Adresse, der Zugriffsadresse und der Zwischenspeicher-Adresse von einem anderen mobilen Endgerät in dem lokalen Netzwerk empfangen wird, das Verfahren ferner Folgendes umfasst:
Senden der entsprechenden Beziehung zwischen der Wifi-Adresse, der Zugriffsadresse und der Zwischenspeicher-Adresse, die von dem mobilen Endgerät selbst gespeichert wird, an ein mobiles Endgerät, das die Anforderung zum Erlangen der entsprechenden Beziehung zwischen der Wifi-Adresse, der Zugriffsadresse und der Zwischenspeicher-Adresse sendet.

10. Verfahren nach einem der Ansprüche 1-3, wobei, wenn die Anforderung zum Erlangen der Wifi-Adresse und der Zwischenspeicher-Adresse, die der Zugriffsadresse in der ersten Datenzugriffsanforderung entspricht, von einem anderen mobilen Endgerät in dem lokalen Netzwerk empfangen wird, das Verfahren ferner Folgendes umfasst:
Durchsuchen der entsprechenden Beziehung zwischen der Wifi-Adresse, der Zugriffsadresse und der Zwischenspeicher-Adresse, die von dem mobilen Endgerät selbst vorgespeichert wird, nach der Wifi-Adresse und der Zwischenspeicher-Adresse, die der Zugriffsadresse in der ersten Datenzugriffsanforderung entspricht, und Senden der herausgesuchten Wifi-Adresse und Zwischenspeicher-Adresse, die der Zugriffsadresse in der ersten Datenzugriffsanforderung entspricht, an ein mobiles Endgerät, das die Anforderung zum Erlangen der Wifi-Adresse und der Zwischenspeicher-Adresse sendet, die der Zugriffsadresse in der ersten Datenzugriffsanforderung entspricht.

11. Verfahren nach einem der Ansprüche 1-3, wobei, wenn die Zwischenspeicher-Adresse von einem anderen mobilen Endgerät in dem lokalen Netzwerk empfangen wird, das Verfahren ferner Folgendes umfasst:
Senden von Daten, die der Zwischenspeicher-Adresse entsprechen, an das mobile Endgerät, das die Zwischenspeicher-Adresse sendet.

12. Verfahren nach einem der Ansprüche 1-3, wobei, wenn das mobile Endgerät als das mobile Mastersteuerendgerät des lokalen Netzwerks verwendet wird und eine Anforderung zum Verlassen des lokalen Netzwerks von dem Benutzer empfängt, das Verfahren ferner Folgendes umfasst:
Senden der entsprechenden Beziehung, die von dem mobilen Endgerät selbst gespeichert wird, an ein beliebiges anderes mobiles Endgerät in dem lokalen Netzwerk.

13. Vorrichtung zum Zugreifen auf Daten, umfassend:
ein Erlangungsmodul, das konfiguriert ist, um eine erste Datenzugriffsanforderung von einem Benutzer zu empfangen, und wenn eine Wireless-Fidelity-Adresse (Wifi) und eine Zwischenspeicher-Adresse, die einer Zugriffsadresse in der ersten Datenzugriffsanforderung entspricht, nicht in allen mobilen Endgeräten, die mit einem lokalen Netzwerk verbunden sind, erlangt werden können, Senden der ersten Datenzugriffsanforderung an eine Netzwerkseite; und
ein Speichermodul, das konfiguriert ist, um empfangene Daten von der Netzwerkseite zwischenzuspeichern und eine entsprechende Beziehung zwischen einer Wifi-Adresse eines mobilen Endgeräts selbst, der Zugriffsadresse in der ersten Datenzugriffsanforderung und einer Zwischenspeicher-Adresse der Daten zu speichern oder die entsprechende Beziehung an ein mobiles Mastersteuerendgerät des lokalen Netzwerks zu senden,
wobei, wenn die Wifi-Adresse und die Zwischenspeicher-Adresse, die der Zugriffsadresse in der ersten Datenzugriffsanforderung entspricht, in einem mobilen Endgerät des lokalen Netzwerks erlangt werden können, das Erlangungsmodul ferner zu Folgendem konfiguriert ist:
Erlangen von Daten, die der Zugriffsadresse gemäß der erlangten Wifi-Adresse und Zwischenspeicher-Adresse entsprechen,
wobei, dass die Wifi-Adresse und die Zwischenspeicher-Adresse, die der Zugriffsadresse in der ersten Datenzugriffsanforderung entspricht, erlangt werden kann, Folgendes umfasst:
eine Anforderung zum Erlangen einer entsprechenden Beziehung zwischen einer Wifi-Adresse, einer Zugriffsadresse und einer Zwischenspeicher-Adresse wird an das mobile Mastersteuerendgerät des lokalen Netzwerks gesendet; und eine entsprechende Beziehung von dem mobilen Mastersteuerendgerät und die empfangene entsprechende Beziehung wird nach der Wifi-Adresse durchsucht und die Zwischenspeicher-Adresse, die der Zugriffsadresse in der ersten Datenzugriffsanforderung entspricht, wird empfangen; oder
eine Anforderung zum Erlangen einer Wifi-Adresse und einer Zwischenspeicher-Adresse, die der Zugriffsadresse in der ersten Datenzugriffsanforderung entspricht, wird an das mobile Mastersteuerendgerät des lokalen Netzwerks gesendet; und eine herausgesuchte Wifi-Adresse und Zwischenspeicher-Adresse von dem mobilen Mastersteuerendgerät werden empfangen; oder
die Wifi-Adresse und die Zwischenspeicher-Adresse, die der Zugriffsadresse in der ersten Datenzugriffsanforderung entspricht, werden in der entsprechenden Beziehung zwischen der Wifi-Adresse, der Zugriffsadresse und der Zwischenspeicher-Adresse gesucht, die von dem mobilen Endgerät selbst vorgespeichert wird; oder
wenn die Wifi-Adresse und die Zwischenspeicher-Adresse, die der Zugriffsadresse in der ersten Datenzugriffsanforderung entspricht, in der entsprechenden Beziehung zwischen der Wifi-Adresse, der Zugriffsadresse und der Zwischenspeicher-Adresse, die von dem mobilen Endgerät selbst vorgespeichert wird, nicht gefunden werden kann, wird eine Anforderung zum Erlangen der entsprechenden Beziehung an alle anderen mobilen Endgeräte des lokalen Netzwerks gesendet; und entsprechende Beziehungen von allen anderen mobilen Endgeräten des lokalen Netzwerks werden empfangen und die Wifi-Adresse und die Zwischenspeicher-Adresse, die der Zugriffsadresse in der ersten Datenzugriffsanforderung entspricht, wird in den empfangenen entsprechenden Beziehungen gesucht; oder
wenn die Wifi-Adresse und die Zwischenspeicher-Adresse, die der Zugriffsadresse in der ersten Datenzugriffsanforderung entspricht, in der entsprechenden Beziehung zwischen der Wifi-Adresse, der Zugriffsadresse und der Zwischenspeicher-Adresse, die von dem mobilen Endgerät selbst vorgespeichert wird, nicht gefunden werden kann, wird die Anforderung zum Erlangen der Wifi-Adresse und der Zwischenspeicher-Adresse, die der Zugriffsadresse in der ersten Datenzugriffsanforderung entspricht, an alle anderen mobilen Endgeräte des lokalen Netzwerks gesendet; und die herausgesuchten Wifi-Adresse(n) und Zwischenspeicher-Adresse(n) werden von einem oder mehreren von allen anderen mobilen Endgeräten des lokalen Netzwerks empfangen.

## Revendications

1. Procédé d'accès à des données, le procédé étant mis en oeuvre par un terminal mobile et comprenant :
la réception d'une première demande d'accès à des données de la part d'un utilisateur, et lorsqu'une adresse de fidélité sans fil (Wifi) et une adresse de mise en mémoire cache correspondant à une adresse d'accès dans la première demande d'accès aux données ne peut pas être obtenue dans tous les terminaux mobiles qui sont reliés à un réseau local, l'envoi de la première demande d'accès aux données à un côté réseau (100) ; et
la mise en mémoire cache de données reçues depuis un côté réseau, et le stockage d'une relation correspondante entre une adresse Wifi du terminal mobile lui-même, l'adresse d'accès dans la première demande d'accès aux données, et une adresse de mise en mémoire cache des données ou l'envoi de la relation correspondante à un terminal mobile à commande maître du réseau local (101),
lors de l'obtention de l'adresse Wifi et de l'adresse de mise en mémoire cache correspondant à l'adresse d'accès dans la première demande d'accès aux données dans un terminal mobile du réseau local, le procédé comprenant en outre :
l'obtention de données correspondant à l'adresse d'accès en fonction de l'adresse Wifi et de l'adresse de mise en mémoire cache obtenues,
l'obtention de l'adresse Wifi et de l'adresse de mise en mémoire cache correspondant à l'adresse d'accès dans la première demande d'accès aux données comprenant :
l'envoi d'une demande d'obtention d'une relation correspondante entre une adresse Wifi, une adresse d'accès et une adresse de mise en mémoire cache au terminal mobile à commande maître du réseau local ; et la réception d'une relation correspondante depuis le terminal mobile à commande maître et la recherche de la relation correspondante reçue pour l'adresse Wifi et l'adresse de mise en mémoire cache correspondant à l'adresse d'accès dans la première demande d'accès aux données ; ou
l'envoi d'une demande d'obtention d'une adresse Wifi et d'une adresse de mise en mémoire cache correspondant à l'adresse d'accès dans la première demande d'accès aux données au terminal mobile à commande maître du réseau local ; et la réception de l'adresse Wifi et de l'adresse de mise en mémoire cache recherchées depuis le terminal mobile à commande maître ; ou
la recherche de la relation correspondante pré-stockée par le terminal mobile lui-même entre l'adresse Wifi, l'adresse d'accès et l'adresse de mise en mémoire cache pour l'adresse Wifi et l'adresse de mise en mémoire cache correspondant à l'adresse d'accès dans la première demande d'accès aux données ; ou
lorsque l'adresse Wifi et l'adresse de mise en mémoire cache correspondant à l'adresse d'accès dans la première demande d'accès aux données ne peut pas être trouvée dans la relation correspondante pré-stockée par le terminal mobile lui-même entre l'adresse Wifi, l'adresse d'accès et l'adresse de mise en mémoire cache, l'envoi d'une demande d'obtention de la relation correspondante de tous les autres terminaux mobiles du réseau local ; et la réception de relations correspondantes depuis tous les autres terminaux mobiles du réseau local, et la recherche des relations correspondantes reçues pour l'adresse Wifi et l'adresse de mise en mémoire cache correspondant à l'adresse d'accès dans la première demande d'accès aux données ; ou
lorsque l'adresse Wifi et l'adresse de mise en mémoire cache correspondant à l'adresse d'accès dans la première demande d'accès aux données ne peut pas être trouvée dans la relation correspondante pré-stockée par le terminal mobile lui-même entre l'adresse Wifi, l'adresse d'accès et l'adresse de mise en mémoire cache, l'envoi de la demande d'obtention de l'adresse Wifi et de l'adresse de mise en mémoire cache correspondant à l'adresse d'accès dans la première demande d'accès aux données à tous les autres terminaux mobiles du réseau local ; et la réception de l'adresse / des adresses Wifi et de l'adresse / des adresses de mise en mémoire cache recherchées depuis au moins un de tous les autres terminaux mobiles du réseau local.

2. Procédé selon la revendication 1, dans lequel lorsque l'on détermine que des données mise en mémoire cache par le terminal mobile lui-même sont effacées, le procédé comprend en outre :
l'effacement d'une relation correspondante entre une adresse de mise en mémoire cache des données effacées, l'adresse d'accès et l'adresse Wifi ou l'envoi d'un message indiquant qu'une relation correspondante entre l'adresse de mise en mémoire cache des données effacées, l'adresse d'accès et l'adresse Wifi est effacée au terminal mobile à commande maître.

3. Procédé selon la revendication 1, dans lequel lorsque l'on détermine qu'au moins un terminal mobile dans le réseau local sort du réseau local, le procédé comprend en outre :
l'effacement d'une relation correspondante entre une adresse Wifi d'un terminal mobile qui sort du réseau local, l'adresse d'accès et une adresse de mise en mémoire cache.

4. Procédé selon la revendication 1, dans lequel l'obtention des données correspondant à l'adresse d'accès en fonction de l'adresse Wifi et de l'adresse de mise en mémoire cache obtenues comprend :
lorsque l'on détermine que l'adresse Wifi recherchée ou reçue est l'adresse Wifi du terminal mobile lui-même, l'obtention de données dans l'adresse de mise en mémoire cache recherchée ou reçue,
lorsque l'on détermine que l'adresse Wifi recherchée ou reçue n'est pas l'adresse Wifi du terminal mobile lui-même, l'obtention des données correspondant à l'adresse d'accès en fonction de l'adresse Wifi et de l'adresse de mise en mémoire cache obtenues comprenant :
l'envoi d'une deuxième demande d'accès aux données à un terminal mobile correspondant à l'adresse Wifi recherchée ou reçue, la deuxième demande d'accès aux données contenant l'adresse de mise en mémoire cache recherchée ou reçue ; et
la réception de données correspondant à l'adresse de mise en mémoire cache recherchée ou reçue depuis le terminal mobile correspondant à l'adresse Wifi recherchée ou reçue.

5. Procédé selon la revendication 1, dans lequel l'obtention des données correspondant à l'adresse d'accès en fonction de l'adresse Wifi et de l'adresse de mise en mémoire cache obtenues comprend :
l'obtention de données dans l'adresse de mise en mémoire cache recherchée.

6. Procédé selon la revendication 1, dans lequel l'obtention des données correspondant à l'adresse d'accès en fonction de l'adresse Wifi et de l'adresse de mise en mémoire cache obtenues comprend :
l'envoi de la deuxième demande d'accès aux données à un terminal mobile correspondant à l'adresse / aux adresses Wifi recherchée(s) ou reçue(s), la deuxième demande d'accès aux données contenant une adresse de mise en mémoire cache correspondant à l'adresse / aux adresses Wifi recherchée(s) ou reçue(s) ; et
la réception de données correspondant à l'adresse de mise en mémoire cache recherchée ou reçue depuis le terminal mobile correspondant à l'adresse / aux adresses Wifi recherchée(s) ou reçue(s).

7. Procédé selon l'une quelconque des revendications 1 à 3, dans lequel lorsqu'une relation correspondante est reçue depuis un autre terminal mobile dans le réseau local, le procédé comprend en outre :
le stockage de la relation correspondante reçue.

8. Procédé selon l'une quelconque des revendications 1 à 3, dans lequel lorsqu'un message indiquant que la relation correspondante entre l'adresse de mise en mémoire cache des données effacées, l'adresse d'accès et l'adresse Wifi est effacée, est reçu depuis un autre terminal mobile dans le réseau local, le procédé comprend en outre :
l'effacement de la relation correspondante, stockée par le terminal mobile lui-même, entre l'adresse de mise en mémoire cache des données effacées, l'adresse Wifi, l'adresse d'accès.

9. Procédé selon l'une quelconque des revendications 1 à 3, dans lequel lorsque la demande d'obtention de la relation correspondante entre l'adresse Wifi, l'adresse d'accès et l'adresse de mise en mémoire cache est reçue depuis un autre terminal mobile dans le réseau local, le procédé comprend en outre :
l'envoi de la relation correspondante, stockée par le terminal mobile lui-même, entre l'adresse Wifi, l'adresse d'accès et l'adresse de mise en mémoire cache à un terminal mobile qui envoie la demande d'obtention de la relation correspondante entre l'adresse Wifi, l'adresse d'accès et l'adresse de mise en mémoire cache.

10. Procédé selon l'une quelconque des revendications 1 à 3, dans lequel lorsque la demande d'obtention de l'adresse Wifi et de l'adresse de mise en mémoire cache correspondant à l'adresse d'accès dans la première demande d'accès aux données est reçue depuis un autre terminal mobile dans le réseau local, le procédé comprend en outre :
la recherche de la relation correspondante, stockée par le terminal mobile lui-même, entre l'adresse Wifi, l'adresse d'accès et l'adresse de mise en mémoire cache pour l'adresse Wifi et l'adresse de mise en mémoire cache correspondant à l'adresse d'accès dans la première demande d'accès aux données, et l'envoi de l'adresse Wifi et de l'adresse de mise en mémoire cache recherchées correspondant à l'adresse d'accès dans la première demande d'accès aux données à un terminal mobile qui envoie la demande d'obtention de l'adresse Wifi et de l'adresse de mise en mémoire cache correspondant à l'adresse d'accès dans la première demande d'accès aux données.

11. Procédé selon l'une quelconque des revendications 1 à 3, dans lequel lorsque l'adresse de mise en mémoire cache est reçue depuis un autre terminal mobile du réseau local, le procédé comprend en outre :
l'envoi de données correspondant à l'adresse de mise en mémoire cache au terminal mobile qui envoie l'adresse de mise en mémoire cache.

12. Procédé selon l'une quelconque des revendications 1 à 3, dans lequel lorsque le terminal mobile est utilisé comme terminal mobile à commande maître du réseau local et reçoit une demande de sortir du réseau local de la part de l'utilisateur, le procédé comprend en outre :
l'envoi de la relation correspondante stockée par le terminal mobile lui-même à un quelconque autre terminal mobile dans le réseau local.

13. Appareil d'accès aux données, comprenant :
un module d'obtention conçu pour recevoir une première demande d'accès aux données de la part d'un utilisateur, et lorsqu'une adresse de fidélité sans fil (Wifi) et une adresse de mise en mémoire cache correspondant à une adresse d'accès dans la première demande d'accès aux données ne peut pas être obtenue dans tous les terminaux mobiles qui sont reliés à un réseau local, envoyer la première demande d'accès aux données à un côté réseau ; et
un module de stockage conçu pour mettre en mémoire cache des données reçues depuis le côté réseau et stocker une relation correspondante entre une adresse Wifi d'un terminal mobile lui-même, l'adresse d'accès dans la première demande d'accès aux données et une adresse de mise en mémoire cache des données ou envoyer la relation correspondante à un terminal mobile à commande maître du réseau local,
lorsque l'adresse Wifi et l'adresse de mise en mémoire cache correspondant à l'adresse d'accès dans la première demande d'accès aux données peut être obtenue dans un terminal mobile du réseau local, le module d'obtention est en outre conçu pour :
obtenir des données correspondant à l'adresse d'accès en fonction de l'adresse Wifi et de l'adresse de mise en mémoire cache obtenues,
le fait que l'adresse Wifi et l'adresse de mise en mémoire cache correspondant à l'adresse d'accès dans la première demande d'accès aux données peuvent être obtenues comprend :
une demande d'obtention d'une relation correspondante entre une adresse Wifi, une adresse d'accès et une adresse de mise en mémoire cache au terminal mobile à commande maître du réseau local est envoyée ; et une relation correspondante depuis le terminal mobile à commande maître et la recherche de la relation correspondante reçue pour l'adresse Wifi et l'adresse de mise en mémoire cache correspondant à l'adresse d'accès dans la première demande d'accès aux données est reçue ; ou
une demande d'obtention d'une adresse Wifi et d'une adresse de mise en mémoire cache correspondant à l'adresse d'accès dans la première demande d'accès aux données au terminal mobile à commande maître du réseau local est envoyée ; et l'adresse Wifi et l'adresse de mise en mémoire cache recherchées depuis le terminal mobile à commande maître sont reçues ; ou
l'adresse Wifi et l'adresse de mise en mémoire cache correspondant à l'adresse d'accès dans la première demande d'accès aux données sont recherchées dans la relation correspondante pré-stockée par le terminal mobile lui-même entre l'adresse Wifi, l'adresse d'accès et l'adresse de mise en mémoire cache ; ou
lorsque l'adresse Wifi et l'adresse de mise en mémoire cache correspondant à l'adresse d'accès dans la première demande d'accès aux données ne peuvent pas être trouvées dans la relation correspondante pré-stockée par le terminal mobile lui-même entre l'adresse Wifi, l'adresse d'accès et l'adresse de mise en mémoire cache, une demande d'obtention de la relation correspondante est envoyée à tous les autres terminaux mobiles du réseau local ; et des relations correspondantes sont reçues depuis tous les autres terminaux mobiles du réseau local, et l'adresse Wifi et l'adresse de mise en mémoire cache correspondant à l'adresse d'accès dans la première demande d'accès aux données sont recherchées dans les relations correspondantes reçues ; ou
lorsque l'adresse Wifi et l'adresse de mise en mémoire cache correspondant à l'adresse d'accès dans la première demande d'accès aux données ne peuvent pas être trouvées dans la relation correspondante pré-stockée par le terminal mobile lui-même entre l'adresse Wifi, l'adresse d'accès et l'adresse de mise en mémoire cache, la demande d'obtention de l'adresse Wifi et de l'adresse de mise en mémoire cache correspondant à l'adresse d'accès dans la première demande d'accès aux données est envoyée à tous les autres terminaux mobiles du réseau local ; et l'adresse / les adresses Wifi et l'adresse / les adresses de mise en mémoire cache recherchées sont reçues depuis au moins un de tous les autres terminaux mobiles du réseau local.
